# EUROPÄISCHE PATENTSCHRIFT

(11) **EP 2 258 524 B1**
(45) Veröffentlichungstag und Bekanntmachung des Hinweises auf die Patenterteilung: **24.08.2011**
(21) Anmeldenummer: 10005531.8
(22) Anmeldetag: 27.05.2010
(51) Int. Cl.: B26D 7/06, B65G 23/04, B65G 23/22, B65G 23/44

(54) **Vorrichtung und Verfahren zum Aufschneiden von Lebensmittelprodukten**
Method and device for cutting food products
Dispositif et procédé destinés à la coupe de produits alimentaires

(30) Priorität: 03.06.2009 DE 102009023751
(43) Veröffentlichungstag der Anmeldung: 08.12.2010
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A2- 0 713 753
- WO-A2-2005/037501
- JP-A- 54 122 582
- US-A1- 2003 136 643

## Beschreibung

Die vorliegende Erfindung betrifft eine Vorrichtung und ein Verfahren zum Aufschneiden von Lebensmittelprodukten.

Im Stand der Technik sind verschiedenartige Lebensmittel-Schneidvorrichtungen bekannt. Es werden beispielsweise so genannte Hochleistungs-Slicer eingesetzt, um Lebensmittelprodukte, wie z.B. Fleisch, Wurst oder Käse, mit hoher Schnittgeschwindigkeit aufzuschneiden. In dem Bemühen, die Schnittleistung weiter zu erhöhen, können derartige Vorrichtungen eine Produktzuführung aufweisen, die dazu ausgebildet ist, mehrere Produktlaibe oder Produktriegel - im Folgenden einfach: Produkte - parallel nebeneinander einem gemeinsamen Schneidmesser zuzuführen, das sich in einer Schneidebene bewegt, die senkrecht zur Produktförderrichtung verläuft. Auf diese Weise ist es möglich, eine einzige Schneidvorrichtung - mit entsprechend großem Messer - zum gleichzeitigen Schneiden mehrerer Produkte zu nutzen.

Ein derartiger Hochleistungs-Slicer mit unabhängigen Produktzuführungen für zwei parallel zu fördernde und somit gleichzeitig aufzuschneidende Produkte ist in der europäischen Patentschrift EP 0713 753 B1 beschrieben. Bei diesem Slicer wird jedes aufzuschneidende Produkt mittels einer eigenen angetriebenen Greifkralle, die am hinteren Produktende angreift, in Richtung des Messers geschoben. Die Greifkrallen weisen jeweils einen eigenen Antrieb auf und sind demgemäß vollkommen unabhängig voneinander mit unterschiedlichen Vorschubgeschwindigkeiten antreibbar, sodass es möglich ist, die Dicke der abgetrennten Produktscheiben für die geförderten Produkte mittels der einzelnen Produktzuführantriebe unabhängig voneinander während des Aufschneidens zu verändern.

Slicer mit voneinander unabhängigen Produktzuführantrieben für zwei gleichzeitig aufzuschneidende Produkte sind außerdem aus US 3,605,837 und US 3,927,319 bekannt. Jedes Produkt ist hierbei während des Aufschneidens zwischen zwei gegenüberliegenden Endlosbandförderem eingeklemmt, die vertikal orientiert sind und das Produkt sowohl halten als auch mit einer veränderbaren Zuführrate einer Schneidebene zuführen können. Jedes für jeweils ein Produkt vorgesehene Paar von Endlosbandförderem besitzt einen eigenen Antrieb für die Produktzufuhr, wobei die Antriebe vollkommen unabhängig voneinander sind, sodass die Produktzuführraten der aufzuschneidenden Produkte unabhängig voneinander verändert werden können.

Problematisch bei diesen bekannten Vorrichtungen ist vor allem der relativ hohe Aufwand, der zum Bereitstellen mehrerer voneinander unabhängiger Antriebe einschließlich der zugehörigen Ansteuerungseinrichtungen notwendig ist.

Es ist daher eine Aufgabe der Erfindung, das gleichzeitige Aufschneiden mehrerer parallel geförderter Lebensmittelprodukte zu vereinfachen, wobei für jedes Produkt die Dicke der abgetrennten Produktscheiben individuell veränderbar sein soll.

Die Aufgabe wird zum einen durch eine Vorrichtung mit den Merkmalen des Anspruchs 1 gelöst.

Die erfindungsgemäße Vorrichtung weist eine Produktzuführung auf, die mehrere parallel nebeneinander angeordnete Bandförderer umfasst, die jeweils einen als Produktauflage für ein aufzuschneidendes Produkt dienenden Endlosbandgurt umfassen und gemeinsam antreibbar sind, um gleichzeitig mehrere Produkte, die jeweils auf einem der Bandgurte aufliegen, einer Schneidebene zuzuführen, in der sich wenigstens ein Schneidmesser, insbesondere rotierend und/oder umlaufend, bewegt. Die Bandförderer weisen einen gemeinsamen Antrieb auf, der eine gemeinsame Antriebswelle umfasst, durch welche die auf den Bandgurten aufliegenden Produkte der Schneidebene mit einer gemeinsamen Basisfördergeschwindigkeit zuführbar sind. Jedem Bandgurt ist eine Einstellvorrichtung zugeordnet, die dazu ausgebildet ist, den Laufdurchmesser der Antriebswelle im Bereich des Bandgurtes und damit die Einzelfördergeschwindigkeit des Bandgurtes individuell zu verändern.

Erfindungsgemäß wurde erkannt, dass bei Schneidvorrichtungen der gattungsgemäßen Art in der Praxis meist hinsichtlich ihrer äußeren Form weitgehend übereinstimmende Produkte aufzuschneiden sind, welche lediglich in einem relativ geringen Ausmaß bezüglich ihres Querschnitts variieren. Um entweder einzelne Produktscheiben oder Portionen von Produktscheiben gleichen Gewichts zu produzieren, können die Produkte also im Wesentlichen mit der gleichen Geschwindigkeit gefördert werden, wobei lediglich relativ geringfügige Anpassungen zur exakten Einhaltung des vorgegebenen Scheiben- oder Portionsgewichts erforderlich sind. Diese Anpassungen sind nicht nur für jedes Produkt selbst relativ geringfügig, sondern liegen außerdem für alle gleichzeitig aufzuschneidenden Produkte in der gleichen Größenordnung. Diesen Umstand nutzt die Erfindung aus.

Somit lässt sich erfindungsgemäß der Konstruktions- und Herstellungsaufwand beträchtlich reduzieren, indem ein Satz von parallelen Bandförderern vorgesehen wird, welche gemeinsam angetrieben, aber individuell einstellbar sind. Es ist dazu ein gemeinsamer Antrieb mit einer Antriebswelle vorgesehen, wobei die Antriebswelle im Bereich jedes Bandgurtes eine Lauffläche mit einem bestimmten Laufdurchmesser definiert. Die Lauffläche kann insbesondere durch eine drehfest mit der Antriebswelle verbundene Antriebsrolle gebildet sein. Somit kann sich der Begriff "Laufdurchmesser der Antriebswelle" auch auf ein oder mehrere mit der Antriebswelle drehfest verbundene Zusatzkomponenten beziehen. Die Umlaufgeschwindigkeit eines Bandgurtes und somit die Einzelfördergeschwindigkeit des betreffenden Bandförderers hängt von der Drehzahl der Antriebswelle und vom Laufdurchmesser für den betreffenden Bandgurt ab. Wenn der Laufdurchmesser variabel ist, kann die Einzelfördergeschwindigkeit unter Konstanthaltung der Drehzahl der Antriebswelle für jeden einzelnen Bandgurt individuell verändert werden.

Vorzugsweise ist für jeden Bandgurt der Laufdurchmesser der Antriebswelle während des Aufschneidebetriebs bei umlaufendem Bandgurt veränderbar. Das Anpassen der Einzelfördergeschwindigkeit kann somit gewissermaßen "online" erfolgen, ohne dass eine Verzögerung oder Unterbrechung des fortlaufenden Schneidebetriebs nötig wäre. Insbesondere können so auch Produkte mit einer in Längsrichtung veränderlichen Querschnittsform unter Beibehaltung eines einheitlichen Scheiben- oder Portionsgewichts aufgeschnitten werden, was eine ständige Anpassung der Einzelfördergeschwindigkeit während des Aufschneidens erfordert.

Gemäß einer weiteren Ausführungsform der Erfindung ist für jeden Bandgurt dessen Einzelfördergeschwindigkeit mittels der Einstellvorrichtung in einem Bereich veränderbar, dessen Grenzen dadurch bestimmt sind, dass die Basisfördergeschwindigkeit um ein bestimmtes maximales Maß reduzierbar und erhöhbar ist, wobei beispielsweise die Basisfördergeschwindigkeit um bis zu 20% reduzierbar und um bis zu 20% erhöhbar ist. Der jeweilige aktuelle Wert der Einzelfördergeschwindigkeit kann also für jeden der Bandförderer um einen gemeinsamen Wert variieren, der durch die Basisfördergeschwindigkeit gegeben ist. Die Basisfördergeschwindigkeit wird also gewissermaßen nur mit relativ geringer Bandbreite verändert.

Vorzugsweise ist für jeden Bandgurt der Laufdurchmesser der Antriebswelle stufenlos veränderbar, um eine exakte Anpassung der jeweiligen Einzelfördergeschwindigkeit an die aktuellen Gegebenheiten bzw. jeweiligen Erfordernisse zu gewährleisten.

Gemäß einer weiteren Ausführungsform ist jeder Bandgurt zur Anpassung an eine Änderung des Laufdurchmessers durch elastische Dehnung in der Länge veränderbar und/oder mit einer Spanneinrichtung versehen. Durch diese Maßnahmen kann die mit einer Änderung des Laufdurchmessers verbundene Längenänderung ausgeglichen werden, um so stets ein gleichbleibend gestrafftes Umlaufen des Bandgurtes zu gewährleisten. Bei der Spanneinrichtung kann es sich z.B. um eine mit dem Leertrum des Bandförderers zusammenwirkende, mit Federkraft beaufschlagte Spannrolle handeln.

Gemäß einer weiteren Ausführungsform umfasst jede Einstellvorrichtung zwei drehfest mit der Antriebswelle verbundene und axial relativ zueinander verschiebbare Konusscheiben. Die Konusscheiben können insbesondere mit einem Keilriemen zusammenwirken, dessen Umfangsfläche als Lauffläche für den Bandgurt ausgebildet ist. Die Konusscheiben, welche mit der verjüngten Seite einander zugewandt sind, bilden ein Laufflächenpaar zur symmetrischen Abstützung der Keilriemen-Seitenflächen. Die Querschnittsform des Keilriemens ist zweckmäßigerweise auf die Konusform abgestimmt. Bei einem axialen Zusammenrücken der beiden Konusscheiben findet über die entsprechenden Schrägflächen der Konusscheiben eine Kraftübertragung auf den Keilriemen statt, wodurch dieser radial nach außen gedrückt wird und dementsprechend auf einem größeren effektiven Durchmesser umläuft. Umgekehrt rutscht der Keilriemen radial nach innen, wenn sich die Konusscheiben axial auseinanderbewegen.

Eine Anordnung aus axial verstellbaren Konusscheiben wird bekanntermaßen bei stufenlos verstellbaren Riemengetrieben verwendet, um die Drehzahl der Abtriebswelle bei gleichbleibender Drehzahl der Antriebswelle zu verändern. Bei der beschriebenen Ausführungsform der Erfindung ist jedoch die Drehzahl der Abtriebswelle nicht von Interesse, da über eine beispielsweise vorgesehene, frei gelagerte gemeinsame Umlenkwelle für die Bandgurte kein Abtrieb stattfindet. Es kommt hier vielmehr auf die Änderung der Bahngeschwindigkeit des hier als Bandgurt bezeichneten Riemens an, welche in vorteilhafter Weise zur Einstellung der Einzelfördergeschwindigkeit des betreffenden Bandförderers genutzt werden kann - und zwar insbesondere unabhängig von jeglicher Änderung der Umlenkwellendrehzahl.

Die axiale Relativbewegung der Konusscheiben kann durch verschiedenartige Einstellvorrichtungen herbeigeführt werden. Beispielsweise können externe Mitnehmer oder ineinander gelagerte Hohlwellenabschnitte vorgesehen sein.

Der Keilriemen überträgt das Antriebsmoment in vorteilhafter Weise von den Konusscheiben auf den umlaufenden Bandgurt. Grundsätzlich könnte jedoch auch der zum Fördern der Produkte verwendete, als Produktauflage dienende Bandgurt selbst keilriemenartig ausgebildet sein und ohne einen zusätzlichen, zwischengeschalteten Keilriemen auf den Konusscheiben sowie z.B. einer frei drehbaren Umlenkwelle umlaufen.

Gemäß einer Ausführungsform liegt jeder Keilriemen vollumfänglich an den Konusscheiben an. Der Keilriemen kann dadurch ein hohes Antriebsmoment von den Konusscheiben aufnehmen. Die Änderung des Laufdurchmessers erfolgt unter Verformung des Keilriemens. Der Keilriemen wird also gedehnt, wenn sich die Konusscheiben axial aufeinander zu bewegen. Entsprechend wird der Keilriemen entspannt, wenn sich die Konusscheiben voneinander weg bewegen.

Gemäß einer alternativen Ausführungsform weist jeder Keilriemen eine Länge auf, die größer als der Außendurchmesser der Konusscheiben ist, wobei der Keilriemen durch den Bandgurt gegen die Konusscheiben gedrückt ist und lediglich innerhalb des Wirkbogens an den Konusscheiben anliegt. Der nicht angedrückte Teil des Keilriemens hängt durch und hat keinen Kontakt mit den Laufflächen der Konusscheiben. Bei dieser Ausführungsform ist zur Änderung des Laufdurchmessers keine Verformung des Keilriemens erforderlich, sodass nur relativ geringe axiale Verstellkräfte notwendig sind und ein zum Verstellen vorgesehener Antrieb dementsprechend gering dimensioniert sein kann. Überdies kann der Keilriemen bei dieser Ausführungsform für Wartungs- oder Reinigungszwecke besonders einfach von den Konusscheiben abgenommen werden.

Gemäß einer Ausführungsform ist jeder Bandgurt vorgespannt. Dies ist insbesondere deshalb vorteilhaft, weil der Keilriemen auf diese Weise durch den Bandgurt gegen die Laufflächen der Konusscheiben gedrückt wird, sodass der Keilriemen auch bei Vorliegen eines lose durchhängenden Abschnitts in reibschlüssigem Eingriff mit den antreibenden Konusscheiben steht.

Gemäß einer weiteren Ausgestaltung der Erfindung ist jedem Bandgurt ein oberer Bandgurt zugeordnet, der dazu ausgebildet ist, die Oberseite des Produktes zu beaufschlagen. Ein derartiger Zusatzbandgurt kann selbst ohne Antrieb und lediglich frei laufend ausgebildet sein, sodass die obere Bandeinheit eine Niederhaltefunktion ausübt, wodurch eine besonders zuverlässige Produktpositionierung, -halterung bzw. -führung während des Aufschneidens erreicht wird. Das aufzuschneidende Produkt wird also gewissermaßen zwischen zwei umlaufenden, einander gegenüberliegenden Bandgurten eingeklemmt und auf diese Weise gefördert. Es ist auch möglich, dass jeder obere Bandgurt antreibbar und dabei mit seinem als Produktauflage dienenden unteren Bandgurt, also seinem "Partner-Bandgurt", synchronisierbar ist. Das Produkt wird dann, insofern wie in dem eingangs genannten Stand der Technik, von dem unteren Bandgurt und dem oberen Bandgurt gemeinsam gefördert.

Die Lösung der Aufgabe erfolgt zum anderen durch ein Verfahren mit den Merkmalen des Anspruchs 13.

Bei dem erfindungsgemäßen Verfahren zum Aufschneiden von Lebensmittelprodukten werden mittels einer Produktzuführung, die mehrere parallel nebeneinander angeordnete Bandförderer umfasst, die jeweils einen als Produktauflage für ein aufzuschneidendes Produkt dienenden Endlosbandgurt umfassen, gleichzeitig mehrere Produkte, die jeweils auf einem der Bandgurte aufliegen, einer Schneidebene zugeführt, in der sich wenigstens ein Schneidmesser, insbesondere rotierend und/oder umlaufend, bewegt. Die Bandgurte werden mittels einer gemeinsamenen Antriebswelle angetrieben und für jeden Bandgurt wird der Laufdurchmesser der Antriebswelle im Bereich des Bandgurtes bei Bedarf individuell verändert, um für jedes Produkt die Dicke abzutrennender Produktscheiben individuell einzustellen.

Gemäß einer Ausführungsform wird für jeden Bandgurt der Laufdurchmesser der Antriebswelle in Abhängigkeit von der Kontur des Produktes verändert, wobei vorzugsweise die Kontur des Produktes mit einer in die Vorrichtung integrierten Erfassungseinrichtung ermittelt wird. Sobald also beim Aufschneiden des Produktes beispielsweise ein Produktbereich mit verringerter Querschnittsfläche an die Schneidebene gelangt, wird die Einzelfördergeschwindigkeit des betreffenden Bandförderers um einen entsprechenden Betrag erhöht, sodass im Ergebnis das Produktscheibengewicht unverändert bleibt. Der Schneidvorrichtung ist die Topographie des Produktes und damit der Konturverlauf des Produktes in Förderrichtung bekannt, womit auch bekannt ist, wann welche Produktquerschnittsfläche an die Schneidebene gelangt, sodass durch entsprechende Ansteuerung der Einstellvorrichtung eine jeweils gewünschte Scheibendicke produziert werden kann, und zwar - falls erwünscht - mit von Scheibe zu Scheibe variierender Scheibendicke. Das Prinzip der gezielten Veränderung des Produktvorschubs in Abhängigkeit von der Produktkontur an sich ist bekannt, sodass hierauf nicht näher eingegangen werden soll.

Die Erfindung wird im Folgenden unter Bezugnahme auf die Zeichnung beispielhaft beschrieben.
- Fig. 1: zeigt schematisch eine Draufsicht auf den Produktzufüh- rungsbereich einer erfindungsgemäßen Schneidvorrichtung.
- Fig. 2: zeigt schematisch eine Seitenansicht der Schneidvorrichtung gemäß Fig. 1.
- Fig. 3: zeigt eine vergrößerte Schnittansicht einer Einstellvorrichtung für einen Bandförderer der Schneidvorrichtung gemäß Fig. 1.
- Fig. 4: zeigt schematisch eine Seitenansicht einer Schneidvorrichtung gemäß einer alternativen Ausführungsform der Erfindung.

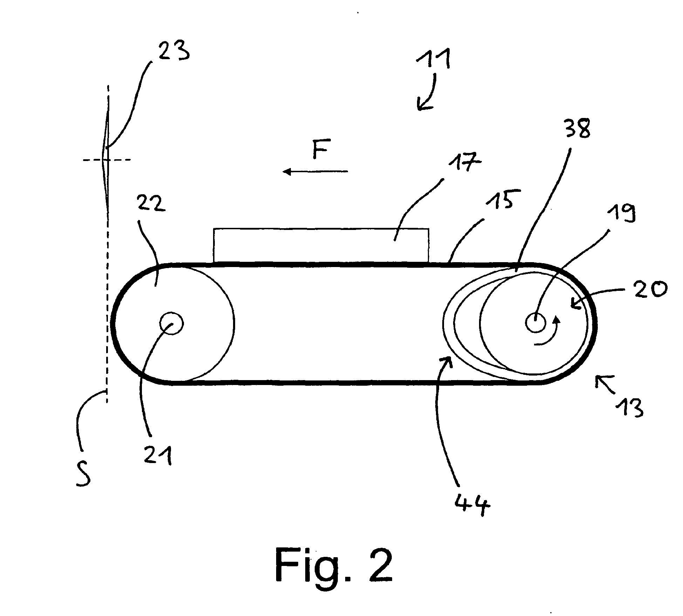

Die erfindungsgemäße Schneidvorrichtung umfasst eine Produktzuführung 11 mit in diesem Beispiel drei nebeneinander angeordneten und parallel zueinander ausgerichteten Bandförderern 13. Jeder der Bandförderer 13 umfasst einen Endlosbandgurt 15, der als Auflage für ein aufzuschneidendes Produkt 17 dient. Die Bandgurte 15 werden durch eine gemeinsame Antriebswelle 19 angetrieben, auf welcher jeweilige Antriebsrollen 20 sitzen. Die Bandgurte 15 laufen ferner frei um eine Umlenkwelle 21 mit Umlenkrollen 22 (Fig. 2) um, wobei die Umlenkrollen 22 nahe einer Schneidebene S angeordnet sind.

In der Schneidebene S läuft ein Schneidmesser 23 (Fig. 2) planetarisch um, wobei alternativ auch ein nicht-planetarisch umlaufendes, sondern lediglich rotierendes Schneidmesser, insbesondere ein Sichelmesser, Verwendung finden kann. Statt auf der gemeinsamen Umlenkwelle 21 können die Umlenkrollen 22 auch separat gelagert sein.

Durch Antreiben der Antriebsrollen 20 mittels der gemeinsamen Antriebswelle 19 werden die auf dem Obertrum der Bandförderer 13 aufliegenden Produkte 17 gleichzeitig und parallel zueinander entlang einer Produktförderrichtung F der Schneidebene S zugeführt.

Der Antrieb der Antriebsrollen 20 muss nicht direkt durch eine gemeinsame koaxiale Antriebswelle 19 erfolgen. Je nach Ausführungsform ist es auch möglich, dass unterschiedliche Getriebekomponenten als Zwischenglied zwischen der Antriebswelle 19 und der jeweiligen Antriebsrolle 20 vorgesehen sind. Die Antriebswelle 19 stellt jedoch letztlich einen gemeinsamen Antrieb für alle Bandförderer 13 bereit.

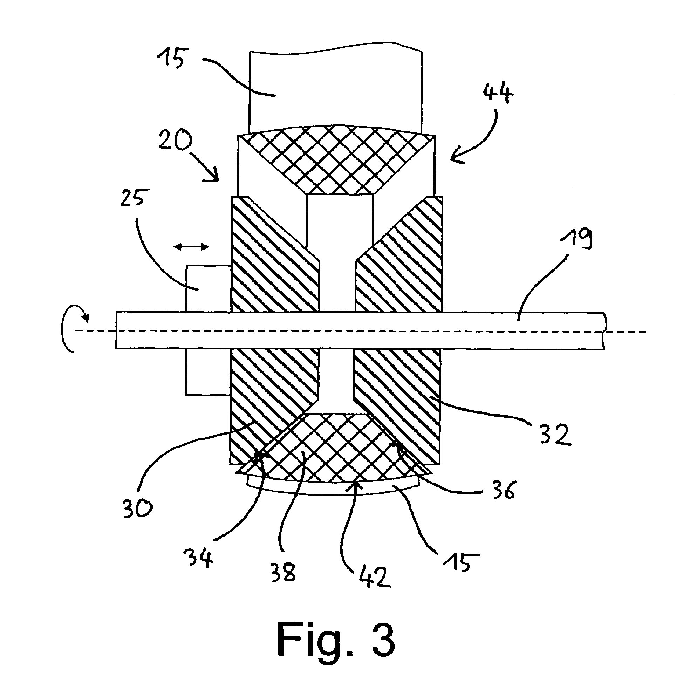

Die Ausbildung der Antriebsrollen 20 wird unter Bezugnahme auf die Fig. 2 und 3 näher erläutert. Jede Antriebsrolle 20 setzt sich aus zwei koaxialen Konusscheiben 30, 32 zusammen, welche drehfest mit der Antriebswelle 19 verbunden sind. Die Konusscheiben 30, 32 bilden ein Paar von Laufflächen 34, 36 für einen Keilriemen 38. Die Querschnittsform des Keilriemens 38 ist an die Form der Konusscheiben 30, 32 angepasst, sodass der Keilriemen 38 im Bereich des Wirkbogens der Antriebsrolle 20 flächig an den Laufflächen 34, 36 anliegt. Über den Keilriemen 38 ist jeweils der zugehörige Bandgurt 15 gespannt, sodass die Umfangsfläche 42 des Keilriemens 38 eine Lauffläche für den Bandgurt 15 bildet. Die Bandgurte 15 sind als elastisch dehnbare Transportriemen ausgebildet und stehen unter Vorspannung. Der Keilriemen 38 wird auf diese Weise gegen die Laufflächen 34, 36 gedrückt, wodurch ein Reibschluss zwischen den Konusscheiben 30, 32 und dem Keilriemen 38 sowie zwischen dem Keilriemen 38 und dem Bandgurt 15 hergestellt wird.

Bei jedem der Bandförderer 13 ist eine der beiden Konusscheiben 30, 32 axial verschiebbar auf der Antriebswelle 19 gelagert und kann mittels einer motorisch angetriebenen Einstellvorrichtung 25 relativ zu der anderen Konusscheibe verstellt werden. Durch die Verstellung wird der Keilriemen 38 in radialer Richtung verschoben und läuft auf einem veränderten Laufdurchmesser um, wodurch sich auch für den Bandgurt 15 ein veränderter Laufdurchmesser ergibt.

In einem Grundzustand der Schneidvorrichtung laufen alle Bandgurte 15 in gedehntem Zustand mit einer gemeinsamen Basisfördergeschwindigkeit um, sodass alle Produkte "gleich schnell sind" und die Dicke der abgetrennten Produktscheiben für alle Bandförderer 13 gleich ist. Da die Bahngeschwindigkeit der Bandgurte 15 und folglich die Einzelfördergeschwindigkeit der Bandförderer 13 außer von der Drehzahl der Antriebswelle 19 auch vom Laufdurchmesser des jeweiligen Bandgurtes 15 abhängt, kann durch Ansteuern der Einstellvorrichtungen 25 die Einzelfördergeschwindigkeit jedes Bandförderers 13 in Bezug auf den Wert der Basisfördergeschwindigkeit entweder erhöht oder erniedrigt werden. Diese individuelle Variation der Einzelfördergeschwindigkeiten der Bandgurte 15 erfolgt trotz des gemeinsamen Antriebs der Bandgurte 15 durch die mit konstanter Drehzahl rotierende gemeinsame Antriebswelle 19. Da jedem Bandförderer 13 eine eigene Einstellvorrichtung 25 zugeordnet ist, können die Einzelfördergeschwindigkeiten individuell variiert werden.

Wie insbesondere aus Fig. 2 hervorgeht, weist jeder Keilriemen 38 eine Länge auf, die größer als der Außendurchmesser der Konusscheiben 30, 32 ist, sodass sich außerhalb des Wirkbogens der Antriebsrolle 20 eine außer Eingriff mit der Antriebsrolle 20 befindliche Schlaufe 44 bildet. Aufgrund dieser Ausbildung kann der Keilriemen 38 im Wartungs- oder Reinigungsfall leicht von den Konusscheiben 30, 32 abgenommen werden. Zudem muss der Keilriemen 38 nicht gedehnt werden, um eine Erhöhung des Laufdurchmessers zu bewirken, was hinsichtlich der zum Verstellen der Konusscheiben 30, 32 notwendigen Kraft von Vorteil ist.

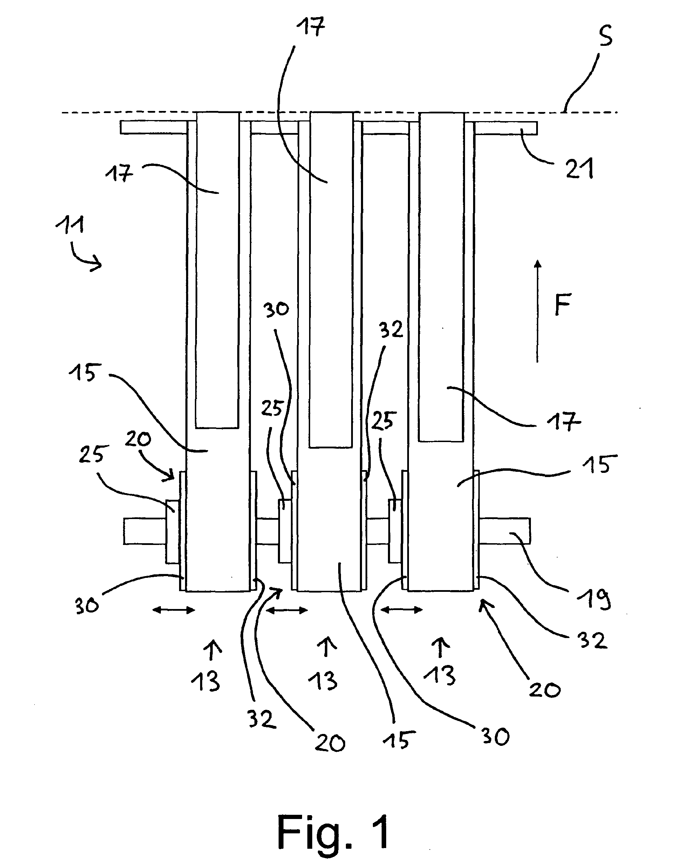

In Fig. 1 ist die individuelle Einstellung der Einzelfördergeschwindigkeiten durch eine unterschiedliche Stellung der Produkte 17 in Bezug auf die Schneidebene S veranschaulicht, wobei zum besseren Verständnis angenommen wird, dass die Produkte 17 ursprünglich die gleiche Länge besaßen. Demgemäß eilt das in Fig. 1 links befindliche Produkt 17 momentan den anderen Produkten voraus, sodass es momentan die kleinste Restlänge besitzt. Da das Schneidmesser 23 (Fig. 2) mit konstanter Schneidfrequenz durch alle zugestellten Produkte 17 hindurchschneidet, fallen die von den Produkten 17 abgetrennten Produktscheiben umso dicker aus, je größer die Einzelfördergeschwindigkeit des jeweiligen Bandförderers 13 momentan ist.

Insgesamt ist durch die erfindungsgemäße Anordnung eine individuelle Veränderung der Einzelfördergeschwindigkeit jedes der Bandförderer 13 innerhalb eines sich um die Basisfördergeschwindigkeit erstreckenden Bereichs ermöglicht. Der Verstellbereich ist durch die jeweiligen Extremstellungen der Konusscheiben 30, 32 gegeben. Der Variationsbereich der Einzelfördergeschwindigkeit ist beispielsweise durch eine Erhöhung und eine Verringerung der Basisfördergeschwindigkeit um jeweils maximal 20% definiert. Diese Variationsbreite ist für die Praxis ausreichend, da auf den einzelnen Bandförderern 13 normalerweise solche Produkte 17 gleichzeitig zu fördern und aufzuschneiden sind, die sich hinsichtlich ihrer äußeren Kontur, insbesondere des Verlaufes ihrer Querschnittsfläche in Längsrichtung, nur in einem Maße derart unterscheiden, dass zur Erzielung gewichtskonstanter Scheiben oder Portionen eine dafür erforderliche Variation der Scheibendicke durch vergleichsweise geringe relative Einzelfördergeschwindigkeitsänderungen erreicht werden kann.

Sollte aufgrund der Eigenschaften der aufzuschneidenden Produkte eine stärkere Anpassung der Bandlaufgeschwindigkeit erforderlich sein als durch ein maximal mögliches Verstellen der Konusscheiben 30, 32 bewerkstelligt werden kann, ist es jederzeit möglich, gewissermaßen einen gemeinsamen "offset" bzw. eine gemeinsame Grundzustandsverschiebung für alle Bandförderer 13 direkt über den gemeinsamen Antrieb zu realisieren, z.B. in dem hier angegebenen Ausführungsbeispiel durch eine Erhöhung oder Reduzierung der Drehzahl der Antriebswelle 19.

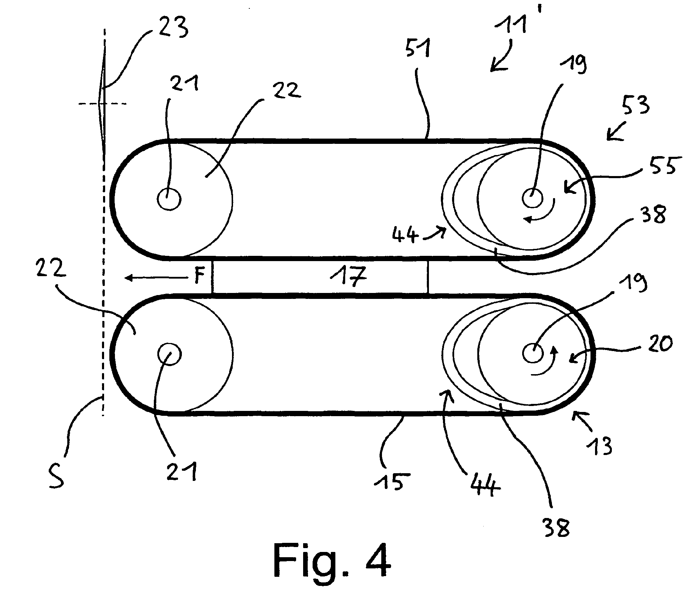

Fig. 4 zeigt eine alternative Ausführungsform der Erfindung. Bei der Produktzuführung 11' ist jedem Bandgurt 15 ein oberer Bandgurt 51 zugeordnet, welcher die Oberseite des Produkts 17 beaufschlagt und so für eine zuverlässigere Produktführung während des Fördervorgangs sorgt. Das zu fördernde Produkt 17 ist zwischen den gegenüberliegenden Bandgurten 15, 51 eingeklemmt. Der obere Bandgurt 51 ist einem oberen Bandförderer 53 zugeordnet, welcher in Analogie zu dem unteren Bandförderer 13 aufgebaut ist und eine aus zwei verstellbaren Konusscheiben zusammengesetzte Antriebsrolle 55 umfasst. Damit die Laufgeschwindigkeit der beiden das Produkt 17 gemeinsam zuführenden Trums gleich groß ist, ist der obere Bandförderer 53 synchron zu dem unteren Bandförderer 33 angetrieben, wobei die Synchronisierung insbesondere dadurch erreicht wird, dass die Verstellung der Konusscheiben 30, 32 der unteren Antriebsrolle 20 stets von einer gleich großen Verstellung der Konusscheiben der oberen Antriebsrolle 55 begleitet ist. Dies kann entweder mittels eines entsprechend angesteuerten eigenen Stellantriebs erreicht werden oder durch eine geeignete mechanische Kopplung der jeweiligen verstellbaren Konusscheiben. Entsprechend sind auch die beiden Antriebswellen 19 synchronisiert.

Alternativ kann vorgesehen sein, dass der obere Bandförderer 53 keinen Antrieb aufweist und der obere Bandgurt 51 lediglich frei umläuft.

Dadurch, dass erfindungsgemäß die Einzelfördergeschwindigkeiten individuell einstellbar sind, können die Dicken der abgetrennten Produktscheiben für jeden Bandförderer 13 individuell angepasst werden, ohne dass deshalb für jeden Bandförderer 13 ein eigener Antrieb vorzusehen wäre. Der Aufwand und die Kosten zur Bereitstellung der erfindungsgemäßen Produktzuführung 11, 11' und somit des gesamten Slicers können somit gesenkt werden. Insbesondere kann trotz in Produktlängsrichtung variierender Produktquerschnittsflächen ein konstantes Scheiben- oder Portionsgewicht bei allen gleichzeitig zugeführten Produkten 17 sichergestellt werden.

### Bezugszeichenliste:

- 11, 11': Produktzuführung
- 13: Bandförderer
- 15: Bandgurt
- 17: Produkt
- 19: Antriebswelle
- 20: Antriebsrolle
- 21: Umlenkwelle
- 22: Umlenkrolle
- 23: Schneidmesser
- 25: Einstellvorrichtung
- 30: Konusscheibe
- 32: Konusscheibe
- 34: Lauffläche
- 36: Lauffläche
- 38: Keilriemen
- 42: Umfangsfläche
- 44: Schlaufe
- 51: oberer Bandgurt
- 53: oberer Bandförderer
- 55: obere Antriebsrolle
- S: Schneidebene
- F: Produktförderrichtung

## Patentansprüche

1. Vorrichtung zum Aufschneiden von Lebensmittelprodukten, insbesondere Hochleistungs-Slicer, mit
einer Produktzuführung (11, 11'), die mehrere parallel nebeneinander angeordnete Bandförderer (13) umfasst, die jeweils einen als Produktauflage für ein aufzuschneidendes Produkt (17) dienenden Endlosbandgurt (15) umfassen und gemeinsam antreibbar sind, um gleichzeitig mehrere Produkte (17), die jeweils auf einem der Bandgurte (15) aufliegen, einer Schneidebene (S) zuzuführen, in der sich wenigstens ein Schneidmesser (23), insbesondere rotierend und/oder umlaufend, bewegt,
wobei die Bandförderer (13) einen gemeinsamen Antrieb aufweisen, der eine gemeinsame Antriebswelle (19) umfasst, durch welche die auf den Bandgurten (15) aufliegenden Produkte (17) der Schneidebene (S) mit einer gemeinsamen Basisfördergeschwindigkeit zuführbar sind, und wobei jedem Bandgurt (15) eine Einstellvorrichtung (25) zugeordnet ist, die dazu ausgebildet ist, den Laufdurchmesser der Antriebswelle (19) im Bereich des Bandgurtes (15) und damit die Einzelfördergeschwindigkeit des Bandgurtes (15) individuell zu verändern.

2. Vorrichtung nach Anspruch 1,
**dadurch gekennzeichnet,**
**dass** für jeden Bandgurt (15) der Laufdurchmesser der Antriebswelle (19) während des Aufschneidebetriebs bei umlaufendem Bandgurt (15) veränderbar ist.

3. Vorrichtung nach Anspruch 1 oder 2,
**dadurch gekennzeichnet,**
**dass** für jeden Bandgurt (15) dessen Einzelfördergeschwindigkeit mittels der Einstellvorrichtung (25) in einem Bereich veränderbar ist, dessen Grenzen **dadurch** bestimmt sind, dass die Basisfördergeschwindigkeit um ein bestimmtes maximales Maß reduzierbar und erhöhbar ist, wobei vorzugsweise die Basisfördergeschwindigkeit um bis zu 20% reduzierbar und um bis zu 20% erhöhbar ist.

4. Vorrichtung nach zumindest einem der vorstehenden Ansprüche,
**dadurch gekennzeichnet,**
**dass** für jeden Bandgurt (15) der Laufdurchmesser der Antriebswelle (19) stufenlos veränderbar ist.

5. Vorrichtung nach zumindest einem der vorstehenden Ansprüche,
**dadurch gekennzeichnet,**
**dass** jeder Bandgurt (15) zur Anpassung an eine Änderung des Laufdurchmessers durch elastische Dehnung in der Länge veränderbar und/oder mit einer Spanneinrichtung versehen ist.

6. Vorrichtung nach zumindest einem der vorstehenden Ansprüche,
**dadurch gekennzeichnet,**
**dass** jede Einstellvorrichtung (25) zwei drehfest mit der Antriebswelle (19) verbundene und axial relativ zueinander verschiebbare Konusscheiben (30, 32) umfasst.

7. Vorrichtung nach Anspruch 6,
**dadurch gekennzeichnet,**
**dass** die Konusscheiben (30, 32) mit einem Keilriemen (38) zusammenwirken, dessen Umfangsfläche (42) als Lauffläche für den Bandgurt (15) ausgebildet ist.

8. Vorrichtung nach Anspruch 6 oder 7,
**dadurch gekennzeichnet,**
**dass** jeder Keilriemen (38) vollumfänglich an den Konusscheiben (30, 32) anliegt.

9. Vorrichtung nach Anspruch 6 oder 7,
**dadurch gekennzeichnet,**
**dass** jeder Keilriemen (38) eine Länge aufweist, die größer als der Außendurchmesser der Konusscheiben (30, 32) ist, wobei der Keilriemen (38) durch den Bandgurt (15) gegen die Konusscheiben (30, 32) gedrückt ist und lediglich innerhalb des Wirkbogens an den Konusscheiben (30, 32) anliegt.

10. Vorrichtung nach zumindest einem der vorstehenden Ansprüche,
**dadurch gekennzeichnet,**
**dass** jeder Bandgurt (15) vorgespannt ist.

11. Vorrichtung nach zumindest einem der vorstehenden Ansprüche,
**dadurch gekennzeichnet,**
**dass** jedem Bandgurt (15) ein oberer Bandgurt (51) zugeordnet ist, der dazu ausgebildet ist, die Oberseite des Produktes (17) zu beaufschlagen.

12. Vorrichtung nach Anspruch 11,
**dadurch gekennzeichnet,**
**dass** jeder obere Bandgurt (51) antreibbar und mit seinem als Produktauflage dienenden Bandgurt (15) synchronisierbar ist.

13. Verfahren zum Aufschneiden von Lebensmittelprodukten, insbesondere mittels einer Vorrichtung nach einem der vorhergehenden Ansprüche, bei dem
- mittels einer Produktzuführung (11, 11'),
die mehrere parallel nebeneinander angeordnete Bandförderer (13) umfasst, die jeweils einen als Produktauflage für ein aufzuschneidendes Produkt (17) dienenden Endlosbandgurt (15) umfassen,
gleichzeitig mehrere Produkte (17), die jeweils auf einem der Bandgurte (15) aufliegen, einer Schneidebene (S) zugeführt werden, in der sich wenigstens ein Schneidmesser (23), insbesondere rotierend und/oder umlaufend, bewegt,
- die Bandgurte (15) mittels
einer gemeinsamen Antriebswelle (19) für die Bandgurte (15) umfassenden, Antriebs angetrieben werden, und
- für jeden Bandgurt (15) der Laufdurchmesser der Antriebswelle (19) im Bereich des Bandgurtes (15) bei Bedarf individuell verändert wird, um für jedes Produkt (17) die Dicke abzutrennender Produktscheiben individuell einzustellen.

14. Verfahren nach Anspruch 13,
**dadurch gekennzeichnet,**
**dass** für jeden Bandgurt (15) der Laufdurchmesser der Antriebswelle (19) in Abhängigkeit von der Kontur des Produktes (17) verändert wird, wobei vorzugsweise die Kontur des Produktes (17) mit einer in die Vorrichtung integrierten Erfassungseinrichtung ermittelt wird.

## Claims

1. An apparatus for the slicing of food products, in particular a high-performance slicer, comprising
a product feeder (11, 11') which includes a plurality of belt conveyors (13) which are arranged parallel to one another, which each include an endless belt (15) serving as a product support for a product (17) to be sliced and which can be driven together in order simultaneously to feed a plurality of products (17) which each lie on one of the belts (15) to a cutting plane (S) in which at least one cutting blade (23) moves, in particular in a rotating and/or circulating manner,
wherein the belt conveyors (13) have a common drive which includes a common drive shaft (19) by which the products (17) lying on the belts (15) can be fed to the cutting plane (S) at a common base conveying speed; and
wherein each belt (15) has a setting apparatus (25) associated with it which is made to individually change the running diameter of the drive shaft (19) in the region of the belt (15) and thus the individual conveying speed of the belt (15).

2. An apparatus in accordance with claim 1, **characterized in that** the running diameter of the drive shaft (19) is changeable for each belt (15) during the slicing operation with a circulating belt (15).

3. An apparatus in accordance with claim 1 or claim 2, **characterized in that**, for each belt (15), its individual setting speed is changeable by means of the setting apparatus (25) in a range whose limits are determined **in that** the base conveying speed can be decreased and increased by a specific maximum degree, with the base conveying speed preferably being able to be decreased by up to 20% and increased by up to 20%.

4. An apparatus in accordance with at least one of the preceding claims, **characterized in that** the running diameter of the drive shaft (19) for each belt (15) can be changed in a stepless manner.

5. An apparatus in accordance with at least one of the preceding claims, **characterized in that** each belt (15) is changeable in length and/or is provided with a clamping apparatus for the adaptation to a change of the running diameter by elastic stretching.

6. An apparatus in accordance with at least one of the preceding claims, **characterized in that** each setting apparatus (25) includes two conical plates (30, 32) which are rotationally fixedly connected to the drive shaft (19) and are axially displaceable relative to one another.

7. An apparatus in accordance with claim 6, **characterized in that** the conical plates (30, 32) cooperate with a V-belt (38) whose peripheral surface (42) is made as a running surface for the belt (15).

8. An apparatus in accordance with claim 6 or claim 7, **characterized in that** each V-belt (38) contacts the conical plates (30, 32) over the full area.

9. An apparatus in accordance with claim 6 or claim 7, **characterized in that** each V-belt (38) has a length which is larger than the outer diameter of the conical plates (30, 32), with the V-belt (38) being pressed toward the conical plates (30, 32) by the belt (15) and only contacting the conical plates (30, 32) within the active arc.

10. An apparatus in accordance with at least one of the preceding claims, **characterized in that** each belt (15) is pretensioned.

11. An apparatus in accordance with at least one of the preceding claims, **characterized in that** each belt (15) has an upper belt (51) associated with it which is made to act on the upper side of the product (17).

12. An apparatus in accordance with claim 11, **characterized in that** each upper belt (51) is drivable and can be synchronized with a belt (15) serving as a product support.

13. A method for the slicing of food products, in particular by means of an apparatus in accordance with any one of the preceding claims, wherein
- a plurality of products (17) which each lie on a respective belt (15), are simultaneously fed by means of a product feeder (11, 11') to a cutting plane (S) in which at least one cutting blade (23) moves, in particular in a rotating and/or circulating manner;
- wherein the product feeder includes a plurality of belt conveyors (13) which are arranged parallel next to one another and which in each case include an endless belt (15) serving as a product support for a product (15) to be sliced;
- the belts (15) are driven by means of a common drive shaft (19) for the belts (15); and
- the running diameter of the drive shaft (19) for each belt (15) is changed individually as required in the region of the belt (15) to set the thickness of product slices to be cut individually for each product (17).

14. A method in accordance with claim 13, **characterized in that** the running diameter of the drive shaft (19) for each belt (15) is changed in dependence on the contour of the product (17), with the contour of the product (17) preferably being determined using a detection device integrated into the apparatus.

## Revendications

1. Appareil destiné à la coupe de produits alimentaires, en particulier trancheuse à haute performance, comprenant
un dispositif d'amenée de produits (11, 11') qui comprend plusieurs convoyeurs à bande agencés parallèlement les uns à côté des autres (13), qui comprennent chacun une courroie de bande sans fin (15) servant de support de produit pour un produit (17) qu'il s'agit de couper, et qui peuvent être entraînés conjointement, afin d'amener simultanément plusieurs produits (17), qui reposent respectivement sur l'une des courroies de bande (15), à un plan de coupe (S) dans lequel se déplace au moins un couteau de coupe (23), en particulier en rotation et/ou en circulation,
dans lequel les convoyeurs à bande (13) comprennent un entraînement commun qui inclut un arbre d'entraînement (19) commun, au moyen duquel les produits (13) qui reposent sur les courroies de bande (15) peuvent être amenés au plan de coupe (S) avec une vitesse de convoyage de base commune, et dans lequel un dispositif de réglage (25) est associé à chaque courroie de bande (15), ce dispositif étant réalisé pour modifier individuellement le diamètre efficace de l'arbre d'entraînement (19) dans la région de la courroie de bande (15) et ainsi la vitesse de convoyage individuelle de la courroie de bande (15).

2. Appareil selon la revendication 1,
**caractérisé en ce que** pour chaque courroie de bande (15) le diamètre efficace de l'arbre d'entraînement (19) est modifiable pendant le fonctionnement en découpe alors que la courroie de bande (15) est en circulation.

3. Appareil selon la revendication 1 ou 2,
**caractérisé en ce que** pour chaque courroie de bande (15), sa vitesse de convoyage individuelle est modifiable au moyen d'un dispositif de réglage (25) dans une plage dont les limites sont déterminées du fait que la vitesse de convoyage de base peut être réduite ou augmentée d'une valeur maximale déterminée, la vitesse de convoyage de base pouvant de préférence être réduite jusqu'à 20 % et augmentée jusqu'à 20%.

4. Appareil selon l'une au moins des revendications précédentes,
**caractérisé en ce que** le diamètre efficace de l'arbre d'entraînement (19) est modifiable en continu pour chaque courroie de bande (15).

5. Appareil selon l'une au moins des revendications précédentes,
**caractérisé en ce que** chaque courroie de bande (15) est modifiable en longueur par allongement élastique, pour l'adaptation à une modification du diamètre efficace, et/ou est pourvue d'un moyen de tensionnement.

6. Appareil selon l'une au moins des revendications précédentes,
**caractérisé en ce que** chaque dispositif de réglage (25) comprend deux disques coniques (30, 32) reliés solidairement en rotation à l'arbre d'entraînement et déplaçables axialement l'un par rapport à l'autre.

7. Appareil selon la revendication 6,
**caractérisé en ce que** les disques coniques (30, 32) coopèrent avec une courroie trapézoïdale (38), dont la surface périphérique (42) est réalisée à titre de surface de circulation pour la courroie de bande (15).

8. Appareil selon la revendication 6 ou 7,
**caractérisé en ce que** chaque courroie trapézoïdale (38) s'applique sur la totalité de la périphérie contre les disques coniques (30, 32).

9. Appareil selon la revendication 6 ou 7,
**caractérisé en ce que** chaque courroie trapézoïdale (38) a une longueur qui est supérieure au diamètre extérieur des disques coniques (30, 32), et la courroie trapézoïdale (38) est poussée par la courroie de bande (15) contre les disques coniques (30, 32) et s'applique contre les disques coniques (30, 32) uniquement à l'intérieur de l'arc efficace.

10. Appareil selon l'une au moins des revendications précédentes, **caractérisé en ce que** chaque courroie de bande (15) est sous prétension.

11. Appareil selon l'une au moins des revendications précédentes, **caractérisé en ce qu'**une courroie de bande supérieure (51) est associée à chaque courroie de bande (15), courroie de bande supérieure qui est réalisée pour attaquer la surface du produit (17).

12. Appareil selon la revendication 11,
**caractérisé en ce que** chaque courroie de bande supérieure (51) peut être entraînée et être synchronisée avec sa courroie de bande (15) qui sert de support pour les produits.

13. Procédé pour la découpe de produits alimentaires, en particulier au moyen d'un appareil selon l'une des revendications précédentes, dans lequel
- au moyen d'une amenée de produits (11, 11') qui comprend plusieurs convoyeurs à bande (13) agencés parallèlement les uns aux autres et qui comprennent une courroie de bande sans fin (15) servant de support pour un produit (17) qu'il s'agit de couper, on amène simultanément plusieurs produits (17), qui reposent respectivement sur l'une des courroies de bande (15), à un plan de coupe (S) dans lequel se déplace au moins un couteau de coupe (23), en particulier en rotation et/ou en circulation,
- les courroies de bande (15) sont entraînées au moyen d'un entraînement commun qui inclut des arbres d'entraînement (19) pour les courroies de bande (15), et
- pour chaque courroie de bande (15) le diamètre efficace de l'arbre d'entraînement (19) est modifié en cas de besoin de manière individuelle dans la région de la courroie de bande (15), afin de régler individuellement pour chaque produit (17) l'épaisseur des tranches de produit qu'il s'agit de découper.

14. Procédé selon la revendication 13,
**caractérisé en ce que** pour chaque courroie de bande (15) le diamètre efficace de l'arbre d'entraînement (19) varie en fonction du contour du produit (17), et l'on détermine de préférence le contour du produit (17) avec un moyen de détection intégré dans l'appareil.
